# EUROPÄISCHE PATENTSCHRIFT

(11) **EP 3 021 023 B1**
(45) Veröffentlichungstag und Bekanntmachung des Hinweises auf die Patenterteilung: **19.07.2017**
(21) Anmeldenummer: 15193849.5
(22) Anmeldetag: 10.11.2015
(51) Int. Cl.: F16K 31/60, E03C 1/04

(54) **SANITÄRARMATUR MIT VERSETZT ANGEORDNETER BEDIENUNGSELEMENTSCHWENKACHSE**
SANITARY FITTING WITH OFFSET OPERATING ELEMENT TILT AXIS
ROBINETTERIE AYANT UN AXE DE PIVOTEMENT DECALE D'ELEMENT DE COMMANDE

(30) Priorität: 11.11.2014 DE 102014116420
(43) Veröffentlichungstag der Anmeldung: 18.05.2016
(73) Patentinhaber: Ideal Standard International NV, 1935 Zaventem (BE)
(72) Erfinder: BECKER, Anton, 54558 Gillenfeld (DE)
(74) Vertreter: Müller, Karl-Ernst

(56) Entgegenhaltungen:
- WO-A1-2013/093522
- DE-A1- 3 327 776
- DE-A1- 3 510 351
- DE-A1-102009 001 444

## Beschreibung

Die vorliegende Erfindung betrifft eine Sanitärarmatur mit einem Armaturenkörper und mit einer in dem Armaturenkörper angeordneten und bodenseitig an eine Kaltwasserzuleitung und eine Warmwasserzuleitung anschließbaren sowie einen mit einem Armaturenauslauf verbundenen Mischwasserausgang aufweisenden Mischkartusche, wobei an dem Armaturenkörper ein Bedienungselement zur Einstellung von Menge und Temperatur des in der Mischkartusche zu erzeugenden Mischwassers angeordnet ist, welches an einen an der Mischkartusche angeordneten Stellhebel gekoppelt ist, mit dem durch Verschwenken um eine insbesondere horizontal angeordnete und an einem hinteren Rand des Armaturenkörpers ausgebildete Stellhebelschwenkachse die Durchflussmenge einstellbar und durch Verdrehen um eine Mittelachse das Mischungsverhältnis des zufließenden Kalt- und Warmwassers einstellbar ist, wobei zwischen dem Bedienungselement und dem Stellhebel der Mischkartusche ein Kulissenelement so ausgebildet und angeordnet ist, dass die Verschwenkung des Bedienungselements um eine Bedienungselementschwenkachse in die Verschwenkung des Stellhebels um die Stellhebelschwenkachse umgesetzt wird, wobei die insbesondere horizontal angeordnete Bedienungselementschwenkachse parallel zu der Stellhebelschwenkachse versetzt ist.

Eine Sanitärarmatur ist aus DE 10 2006 006 774 A1 bekannt. Bei einer solchen Sanitärarmatur ist das Bedienungselement starr mit dem Stellhebel der Mischkartusche verbunden, so dass das Bedienungselement gemeinsam mit dem Stellhebel um die Schwenkachse des Stellhebels verschwenkt wird. Da die Stellhebelschwenkachse zentral in dem Armaturenkörper angeordnet ist, wird beim Öffnen der Mischkartusche ein Bereich des Bedienungselementes auf den Armaturenkörper zu verschwenkt, welcher gegebenenfalls mit dem Armaturenkörper in Anlage käme. Damit ein Verschwenken des Bedienungselementes um die zentral in dem Armaturenkörper ausgebildete Stellhebelschwenkachse relativ zu dem Armaturenkörper trotzdem möglich ist, muss das Bedienungselement mit einem entsprechenden Abstand zu dem Armaturenkörper beabstandet sein oder den Armaturenkörper mit einem entsprechenden Abstand übergreifen. Alternativ ist auch bekannt, dass eine dem Armaturenkörper zugewandte Kante des Bedienungselementes an der Seite des Bedienungselements abgeschrägt ist, zu der das Bedienungselement beim Öffnen der Mischkartusche geschwenkt wird. Bei geschlossener Mischkartusche ist der von der abgeschrägten Kante freigegebene Bereich der Sanitärarmatur in der Regel von einer Blende geschützt.

Ein Sanitärarmatur mit den eingangs genannten Merkmalen ist aus DE 10 2009 001444 A1 bekannt. Weitere Sanitärarmaturen sind aus WO 2013/093522 A1, DE 33 27 776 A1 und DE 35 10 351 A1 bekannt.

Alle diese Lösungen haben den Nachteil, dass sie optisch nicht ansprechend sind und dass bei der Gestaltung des Bedienungselements auf die technischen Rahmenbedingungen Rücksicht genommen werden muss.

Aufgabe der Erfindung ist es daher, die mit Bezug zum Stand der Technik geschilderten Probleme zumindest teilweise zu lösen und insbesondere eine Sanitärarmatur anzugeben, bei der das Bedienungselement mit einer größeren Freiheit gestaltet werden kann und die eine ansprechendere Optik aufweist.

Gelöst werden diese Aufgaben durch eine Sanitärarmatur mit den Merkmalen des unabhängigen Anspruchs. Vorteilhafte Weiterbildungen der Sanitärarmatur sind in den abhängigen Ansprüchen und in der Beschreibung angegeben, wobei Merkmale der vorteilhaften Weiterbildungen in technologisch sinnvoller Weise beliebig miteinander kombinierbar sind.

Gelöst werden diese Aufgaben insbesondere durch eine Sanitärarmatur mit den eingangs genannten Merkmalen, wobei das Kulissenelement als ein einzelnes Bauteil ausgebildet ist und Schlitze aufweist, in denen ein mit dem Stellhebel oder dem Bedienungselement mittelbar oder unmittelbar starr verbundenes Stabelement während des Verschwenkens geführt ist, entsprechend ist das Kulissenelement starr mit dem Bedienungselement beziehungsweise dem Stellhebel verbunden und die von dem Kulissenelement und dem in den Schlitzen angeordneten Stab ausgebildete Kulissenführung dafür sorgt, dass ein Verschwenken des Bedienungselements in ein Verschwenken des Stellhebels resultiert, und dass ein das Kulissenelement übergreifender Abschnitt des Bedienungselements in einer geschlossenen Neutralstellung nicht über den Armaturenkörper übersteht und mit seinen dem Armaturenkörper zugewandten Kanten in einer Ebene endet. Insbesondere ist der Abstand zwischen der Kante des übergreifenden Abschnitts und dem Armaturenkörper bei geschlossener Mischkartusche höchstens 5 mm (Millimeter), bevorzugt höchstens 1 mm. Eine solche Ausgestaltung des Bedienungselements auf seiner dem Armaturenkörper zugewandten Seite war bisher nicht möglich und schafft neue Gestaltungsmöglichkeiten des Bedienungselements.

Wenn das Bedienungselement oberhalb des Armaturenkörpers angeordnet ist, sind die Stellhebelschwenkachse und die Bedienungselementschwenkachse horizontal ausgerichtet und wenn das Bedienungselement seitlich an dem Armaturenkörper angeordnet ist, sind die Schwenkachsen im Wesentlichen vertikal ausgerichtet.

Da die Bedienungselementschwenkachse zu der Stellhebelschwenkachse parallel versetzt ist, kann die Bedienungselementschwenkachse insbesondere an einem vorzugsweise hinteren Rand des Armaturenkörpers und an einem hinteren Rand des Bedienungselements ausgebildet sein. In diesem Fall wird beim Öffnen der Mischkartusche kein Abschnitt des Bedienungselements auf den Armaturenkörper zu geschwenkt. Somit muss keine Vorkehrung an dem Bedienungselement getroffen werden, um das Verschwenken des Bedienungselementes zu dem Armaturenkörper zu ermöglichen. Es kann allenfalls eine Blende vorgesehen sein, die ein durch das Verschwenken des Bedienungselements frei werdenden Bereich der Sanitärarmatur abdeckt und somit ein Eindringen von Fremdkörpern in die Sanitärarmatur verhindert.

Soweit ein den Stellhebel übergreifender Bereich des Bedienungselementes mit seinen dem Armaturenkörper in der geschlossenen Stellung zugewandten Kanten in einer Ebene parallel zu der entsprechenden Seite des Armaturenkörpers enden, könnten diese Kanten bei geschlossener Stellung nur einen sehr geringen Abstand (kleiner als 3 mm) zu dem Armaturenkörper aufweisen.

In einer konkreten Ausgestaltung der Sanitärarmatur kann vorgesehen sein, dass insbesondere in seitlichen Wandungen des Kulissenelements insbesondere als Langlöcher realisierte Schlitze so ausgebildet sind, dass ein mit dem Stellhebel verbundener, in den Schlitzen geführter Stift die Verschwenkung des Bedienungselements um die Bedienungselementschwenkachse in die Verschwenkung des Stellhebels um die Stellhebelschwenkachse übersetzt, wobei insbesondere der Stift ein an den Stellhebel angeschraubtes Adapterstück durchgreift und mit seinen aus dem Adapterstück hervorstehenden Enden in den Schlitzen des Kulissenelements angeordnet ist. Insbesondere aufgrund einer Ausgestaltung mit einem Adapterstück kann die parallele Versetzung der Bedienungselementschwenkachse zu der Stellhebelschwenkachse mit bekannten Mischkartuschen realisiert werden.

Um auf eine einfache Weise auch eine Temperatureinstellung durch Drehen des Stellhebels um die Mittelachse zu erreichen, kann vorgesehen sein, dass das Kulissenelement oder das Bedienungselement schwenkbar an einem bezüglich der Mischkartusche drehbar gelagerten Drehkranz gelagert ist, wobei insbesondere der Drehkranz drehbar an einem in einer in den Armaturenkörper eingeschraubten Stellung die Mischkartusche in dem Armaturenkörper festlegenden Schraubring gelagert ist.

In diesem Zusammenhang kann vorgesehen sein, dass an dem Kulissenelement oder dem Bedienungselement zur Schwenklagerung ein die Bedienungselementschwenkachse bildender Steg geformt ist, der in einem an dem Drehkranz ausgebildeten Vorsprung gelagert ist. Eine solche Ausgestaltung der Schwenklagerung erleichtert die Montage des Kulissenelementes beziehungsweise des Bedienungselementes, da der Steg lediglich an dem Vorsprung schwenkbar festgelegt werden muss. Insbesondere kann der Steg durch eine Rastverbindung an dem Vorsprung schwenkbar gelagert werden.

Die Erfindung sowie das technische Umfeld werden nachfolgend anhand der Figuren beispielhaft erläutert, wobei darauf hinzuweisen ist, dass die Figuren bevorzugte Ausführungsformen der Erfindung zeigen, diese jedoch nicht darauf beschränkt ist. Es zeigen schematisch
- Figur 1:: eine Explosionsansicht einer Sanitärarmatur,
- Figur 2:: einen Längsschnitt durch die Sanitärarmatur in einer ersten Stellung,
- Figur 3:: eine Perspektivansicht eines Details der Sanitärarmatur in der ersten Stellung,
- Figur 4:: den Längsschnitt durch die Sanitärarmatur in einer zweiten Stellung,
- Figur 5:: das Detail der Sanitärarmatur in der zweiten Stellung und
- Figur 6:: eine weitere Ausführungsform der Sanitärarmatur in Explosionsansicht.

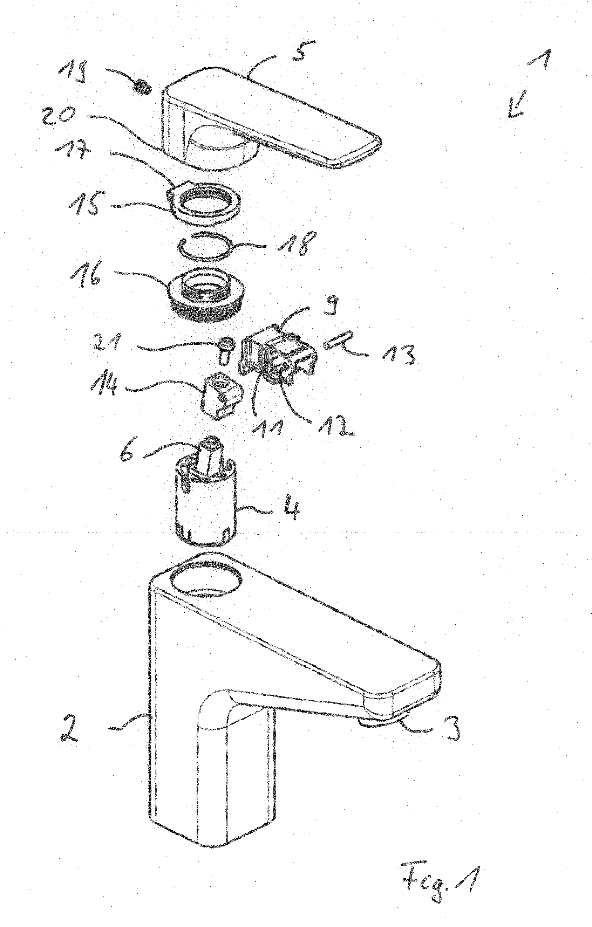

Die in den Figuren 1 bis 5 dargestellte Sanitärarmatur 1 umfasst einen Armaturenkörper 2 mit einem Armaturenauslauf 3. In dem Armaturenkörper 2 ist eine Mischkartusche 4 angeordnet, an die bodenseitig eine Kaltwasserzuleitung und eine Warmwasserzuleitung anschließbar sind. Die Mischkartusche 4 umfasst ferner einen Mischwasserausgang der strömungstechnisch mit dem Armaturenauslauf 3 verbunden ist. Die Mischkartusche 4 umfasst ferner einen Stellhebel 6, mit dem durch Verschwenken um eine horizontal angeordnete Stellhebelschwenkachse 7 die Durchflussmenge einstellbar ist und mit dem durch Verdrehen um eine Mittelachse 8 das Mischungsverhältnis des zuflie-ßenden Kalt- und Warmwassers einstellbar ist.

An dem Stellhebel 6 ist ein Adapterstück 14 mittels einer Schraube 21 angeschraubt, welches von einem Stift 13 durchsetzt ist. Die beidseitig des Adapterstückes 14 überstehenden Enden des Stiftes 13 sind in in Wandungen 11 ausgebildeten Langlöchern 12 eines Kulissenelements 9 angeordnet. Somit ist der Stellhebel 6 beweglich mit dem Kulissenelement 9 verbunden.

Ein an dem Kulissenelement 9 ausgebildeter Steg 10 ist von einem an einem Drehkranz 15 ausgebildeten Vorsprung 17 übergriffen, so dass das Kulissenelement 9 an dem Drehkranz 15 schwenkbar gelagert ist. Das Kulissenelement 9 ist mittels einer Schraube 19 starr mit dem Bedienungselement 5 verbunden. Der an dem Kulissenelement 9 ausgebildete Steg 10 bildet somit für das starr mit dem Kulissenelement 9 verbundene Bedienungselement 5 eine Bedienungselementschwenkachse aus, welche parallel zu der Stellhebelschwenkachse 7 versetzt ist.

Der Drehkranz 15 wiederum ist auf einem Schraubring 16 drehbar gelagert und mittels eines Sicherungsrings 18 axial gesichert. Der Schraubring 16 ist in den Armaturenkörper 2 eingeschraubt und legt die Mischkartusche 4 in dem Armaturenkörper 2 fest.

Das Bedienungselement 5 weist einen das Kulissenelement 9 übergreifenden Abschnitt 20 auf, welcher in einer geschlossenen Neutralstellung nicht über den Armaturenkörper 2 übersteht und auf einer dem Armaturenkörper 2 zugewandten Seite in einer Ebene endet.

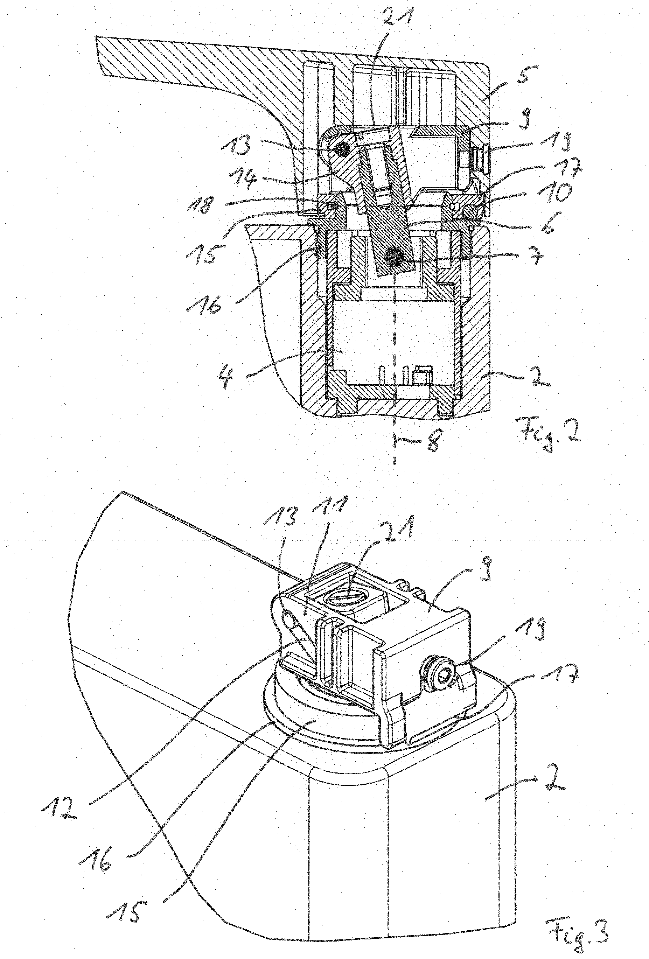

Bei der in den Figuren 2 und 3 dargestellten Stellung befindet sich die Mischkartusche 4 in einem geschlossenen Zustand, so dass kein Wasser durch die Mischkartusche 4 fließt. Der in den Langlöchern 12 geführte Stift 13 befindet sich dabei in einer Endstellung in Anlage an den Enden der Langlöcher 12. Die Endstellung wird durch die Anschläge der Mischkartusche 4 bestimmt.

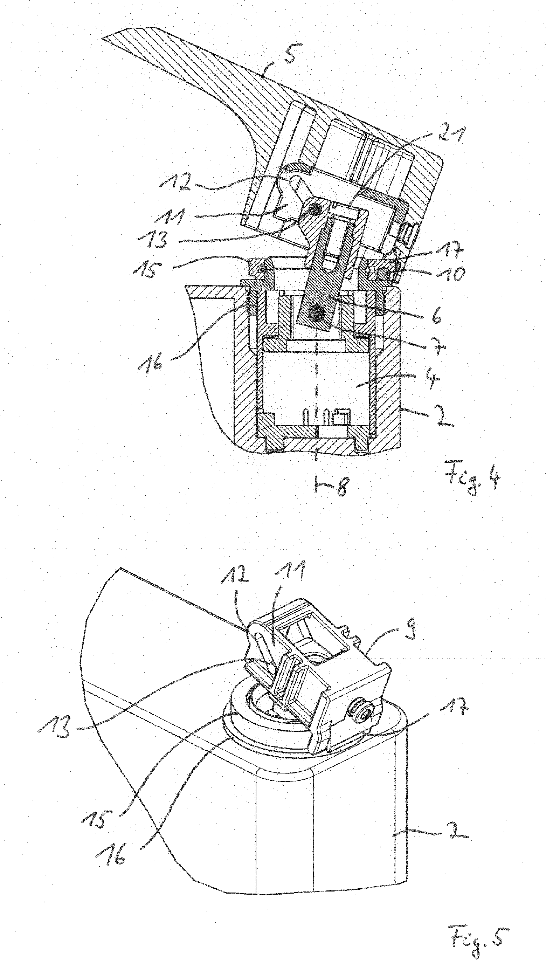

Wird nun, wie in den Figuren 4 und 5 dargestellt, das Bedienungselement 5 um den als Bedienungselementschwenkachse ausgebildeten Steg 10 verschwenkt, wird auch der Stellhebel 6 aufgrund der Führung des mit ihm verbundenen Stifts 13 in den Langlöchern 12 des Kulissenelementes 9 verschwenkt. Die Schwenkbewegung des Bedienungselementes 5 wird dabei von dem anderen Ende des Langloches 12 begrenzt. Durch ein solches Verschwenken des Stellhebels 6 wird die Mischkartusche geöffnet und Wasser fließt durch die Mischkartusche 4. Um die Wassertemperatur einzustellen, kann das Bedienungselement 5 aufgrund der Drehlagerung des Drehkranzes 15 um die Mittelachse 8 verdreht werden, so dass gleichzeitig der Stellhebel 6 ebenfalls um die Drehachse 8 verdreht werden kann.

Aufgrund des parallelen Versatzes der Bedienungselementschwenkachse zu der Drehhebelschwenkachse 7 kann die Bedienungselementschwenkachse am hinteren Rand des Armaturenkörpers 2 angeordnet sein, wodurch kein Übergreifen des Bedienungselementes 5 über den Armaturenkörper 2 vorgesehen sein muss beziehungsweise keine Abschrägung am Bedienungselementes 5 ausgebildet sein muss. Es ist somit möglich, dass Bedienungselement 5 unabhängig von der Funktion zu gestalten.

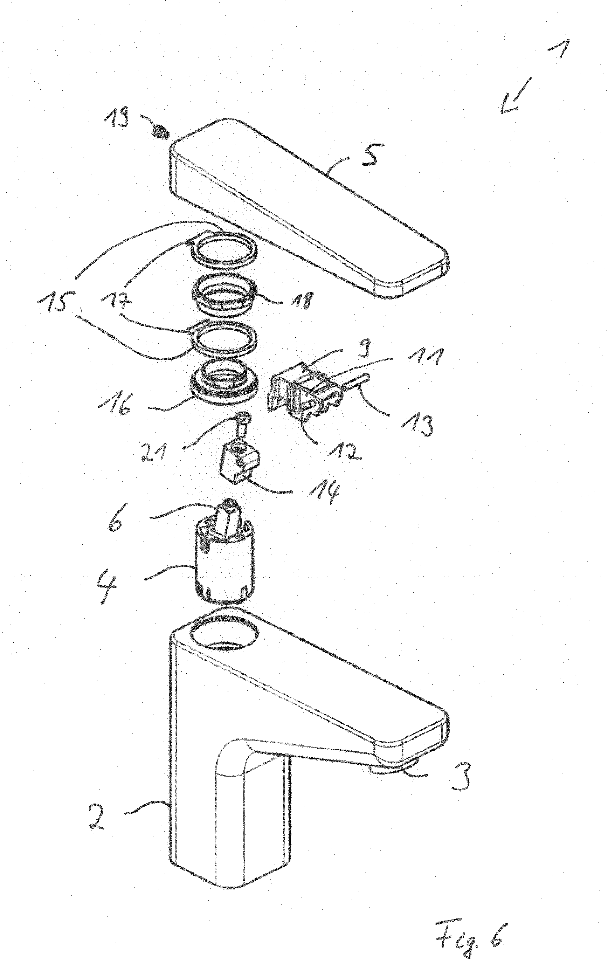

In der Figur 6 ist eine zweite Ausführungsform einer Sanitärarmatur 1 dargestellt, wobei gleiche Bezugszeichen gleiche Elemente wie in der vorbeschriebenen Ausführungsform kennzeichnen. Es wird im Folgenden nur auf die Unterschiede zu der zuvor beschriebenen Ausführungsform eingegangen.

Im Gegensatz zu der zuvor beschriebenen Ausführungsform ist der Drehkranz 15 zweiteilig ausgeführt, wobei an beiden Teilen jeweils ein Vorsprung 17 ausgebildet ist, zwischen welchen der Steg 10 des Kulissenelementes 9 im montieren Zustand angeordnet ist. Der zweiteilige Drehkranz 15 ist auf dem Schraubring 16 drehbar gelagert und mittels eines Sicherungsringes 18 axial gehalten.

Da die Bedienungselementschwenkachse in Form des Steges 10 an einem äu-ßeren Rand des Armaturenkörpers 2 anordenbar ist, kann eine dem Armaturenkörper 2 zugewandte Kante des Bedienungselementes 5 vollständig in einer Ebene enden und parallel zu einer entsprechenden Kante des Armaturenkörpers 2 ausgebildet sein. Somit sind die Gestaltungsmöglichkeiten für die Bedienelemente stark erweitert.

### Bezugszeichenliste

- 1: Sanitärarmatur
- 2: Armaturenkörper
- 3: Armaturenauslauf
- 4: Mischkartusche
- 5: Bedienungselement
- 6: Stellhebel
- 7: Stellhebelschwenkachse
- 8: Mittelachse
- 9: Kulissenelement
- 10: Steg
- 11: Wandung
- 12: Langloch
- 13: Stift
- 14: Adapterstück
- 15: Drehkranz
- 16: Schraubring
- 17: Vorsprung
- 18: Sicherungsring
- 19: Schraube
- 20: Abschnitt
- 21: Schraube

## Patentansprüche

1. Sanitärarmatur (1) mit einem Armaturenkörper (2) und mit einer in dem Armaturenkörper (2) angeordneten und bodenseitig an eine Kaltwasserzuleitung und eine Warmwasserzuleitung anschließbaren sowie einen mit einem Armaturenauslauf (3) verbundenen Mischwasserausgang aufweisenden Mischkartusche (4), wobei an dem Armaturenkörper (2) ein Bedienungselement (5) zur Einstellung von Menge und Temperatur des in der Mischkartusche (4) zu erzeugenden Mischwassers angeordnet ist, welches an einen an der Mischkartusche (4) angeordneten Stellhebel (6) gekoppelt ist, mit dem durch Verschwenken um eine Stellhebelschwenkachse (7) die Durchflussmenge einstellbar und durch Verdrehen um eine Mittelachse (8) das Mischungsverhältnis des zufließenden Kalt- und Warmwassers einstellbar ist, wobei zwischen dem Bedienungselement (5) und dem Stellhebel (6) der Mischkartusche (4) ein Kulissenelement (9) so ausgebildet und angeordnet ist, dass die Verschwenkung des Bedienungselements (5) um eine an einem hinteren Rand des Armaturenkörpers (2) ausgebildete Bedienungselementschwenkachse (10) in die Verschwenkung des Stellhebels (6) um die Stellhebelschwenkachse (7) umgesetzt wird, wodurch kein Übergreifen des Bedienungselementes (5) über den Armaturenkörper (2) vorgesehen sein muss, wobei die Bedienungselementschwenkachse (10) parallel zu der Stellhebelschwenkachse (7) versetzt ist, **dadurch gekennzeichnet, dass** das Kulissenelement (9) als ein einzelnes Bauteil ausgebildet ist und Schlitze (12) aufweist, in denen ein mit dem Stellhebel (6) oder dem Bedienungselement (5) mittelbar oder unmittelbar starr verbundenes Stabelement während des Verschwenkens geführt ist, entsprechend ist das Kulissenelement starr mit dem Bedienungselement beziehungsweise dem Stellhebel verbunden und die von dem Kulissenelement und dem in den Schlitzen angeordneten Stab ausgebildete Kulissenführung sorgt dafür, dass ein Verschwenken des Bedienungselements in ein Verschwenken des Stellhebels resultiert, und dass ein das Kulissenelement (9) übergreifender Abschnitt (20) des Bedienungselements (5) in einer geschlossenen Neutralstellung nicht über den Armaturenkörper (2) übersteht und mit seinen dem Armaturenkörper (2) zugewandten Kanten in einer Ebene endet.

2. Sanitärarmatur (1) nach Anspruch, wobei die Schlitze (12) in dem Kulissenelement (9) so ausgebildet sind, dass ein mit dem Stellhebel (6) verbundener, in den Schlitzen (12) geführter Stift (13) die Verschwenkung des Bedienungselements (5) um die Bedienungselementschwenkachse (10) in die Verschwenkung des Stellhebels (6) um die Stellhebelschwenkachse (7) übersetzt.

3. Sanitärarmatur (1) nach Anspruch 2, wobei der Stift (13) ein an den Stellhebel (5) angeschraubtes Adapterstück (14) durchgreift und mit seinen aus dem Adapterstück (14) hervorstehenden Enden in den Schlitzen (12) des Kulissenelements (9) angeordnet ist.

4. Sanitärarmatur (1) nach einem der vorhergehenden Ansprüche, wobei das Kulissenelement (9) oder das Bedienungselement (5) schwenkbar an einem bezüglich der Mischkartusche (4) drehbar gelagerten Drehkranz (15) gelagert ist.

5. Sanitärarmatur (1) nach Anspruch 4, wobei der Drehkranz (15) drehbar an einem in einer in den Armaturenkörper (2) eingeschraubten Stellung die Mischkartusche (4) in dem Armaturenkörper (2) festlegenden Schraubring (16) gelagert ist.

6. Sanitärarmatur (1) nach Anspruch 4 oder 5, wobei an dem Kulissenelement (9) oder dem Bedienungselement (5) zur Schwenklagerung ein die Bedienungselementschwenkachse bildender Steg (10) geformt ist, der in einem an dem Drehkranz (15) ausgebildeten Vorsprung (17) gelagert ist.

## Claims

1. A faucet (1) comprising a tap body (2) and comprising a mixing cartridge (4), which is disposed in the tap body (2) and can be connected at the bottom to a cold water supply line and a hot water supply line and has a mixed water exit which is connected to a faucet outlet (3), wherein an operating element (5) for adjusting the amount and temperature of the mixed water to be produced in the mixing cartridge (4) is disposed on the tap body (2), which is coupled to an adjusting lever (6) disposed on the mixing cartridge (4) by means of which the flow rate can be adjusted by pivoting about an adjusting-lever pivot axis (7) and the ratio of the inflowing cold and hot water can be adjusted by rotation about a central axis (8), wherein, between the operating element (5) and the adjusting lever (6) of the mixing cartridge (4), a linkage element (9) is configured and disposed, so that the pivoting of the operating element (5) about an operating-element pivot axis (10) formed at the rear edge of the tap body (2) is converted into the pivoting of the adjusting lever (6) about the adjusting-lever pivot axis (7), as a result of which no overlapping of the operating element (5) over the tap body (2) needs to be provided, wherein the operating-element pivot axis (10) is offset parallel to the adjusting-lever pivot axis (7), **characterized in that** the linkage element (9) is formed as a single component and has slots (12) in which a rod element rigidly connected directly or indirectly to the adjusting lever (6) or the operating element (5), is guided during pivoting, accordingly the linkage element is connected rigidly to the operating element or the adjusting lever and the linkage guide formed by the linkage element and the rod disposed in the slots ensures that a pivoting of the operating element results in a pivoting of the adjusting lever and that a section (20) of the operating element (5), overlapping the linkage element (9) in a closed neutral position does not protrude over the tap body (2) and ends with its edges facing the tap body (2) in one plane.

2. The faucet (1) according to claim 1, wherein the slots (12) in the linkage element (9) are configured so that a pin (13) which is connected to the adjusting lever (6) and is guided in the slots (12) converts the pivoting of the operating element (5) about the operating-element pivot axis (10) into the pivoting of the adjusting lever (6) about the adjusting-lever pivot axis (7).

3. The faucet (1) according to claim 2, wherein the pin (13) passes through an adapter piece (14), which is screwed onto the adjusting lever (5) and, with its ends protruding from the adapter piece (14), is disposed in the slots (12) of the linkage element (9).

4. The faucet (1) according to any one of the preceding claims, wherein the linkage element (9) or the operating element (5) is mounted pivotably at a slewing ring (15), which is mounted rotatably with respect to the mixing cartridge (4).

5. The faucet (1) according to claim 4, wherein the slewing ring (15) is mounted rotatably at a ring nut (16) fixing the mixing cartridge (4) in the tap body (2) in a screwed-in position in the tap body (2).

6. The faucet (1) according to claims 4 or 5, wherein a web (10), forming the operating-element pivot axis is formed at the linkage element (9) or the operating element (5) for the pivot bearing, which operating element is mounted in a projection (17) formed at the slewing ring (15).

## Revendications

1. Robinetterie sanitaire (1) avec un corps de robinet (2) et avec une cartouche de mélange (4) disposée dans le corps de robinet (2) et raccordable par le fond à une arrivée d'eau froide et une arrivée d'eau chaude et comportant une sortie d'eau de mélange reliée à une sortie de robinet (3), un élément de commande (5) pour régler le débit et la température de l'eau de mélange à produire dans la cartouche de mélange (4) étant disposé sur le corps de robinet (2), lequel est couplé à un levier de réglage (6) disposé sur la cartouche de mélange (4), avec lequel le débit peut être réglé par pivotement autour d'un axe de pivotement de levier de réglage (7) et le rapport de mélange de l'eau froide et chaude affluant pouvant être réglé par rotation autour d'un axe central (8), un élément à coulisse (9) étant constitué et disposé entre l'élément de commande (5) et le levier de réglage (6) de la cartouche de mélange (4) de telle manière que le pivotement de l'élément de commande (5) autour d'un axe de pivotement d'élément de commande (10) constitué sur un bord arrière du corps de robinet (2) est converti en pivotement du levier de réglage (6) autour de l'axe de pivotement de levier de réglage (7), aucun chevauchement de l'élément de commande (5) ne devant être prévu sur le corps de robinet (2), l'axe de pivotement de l'élément de commande (10) étant décalé parallèlement à l'axe de pivotement de levier de réglage (7), **caractérisée en ce que** l'élément à coulisse (9) est constitué comme un composant individuel et comporte des fentes (12) dans lesquelles est conformément guidée pendant le pivotement une barrette reliée directement ou indirectement de manière fixe au levier de réglage (6) ou à l'élément de commande (5), l'élément à coulisse est relié de manière fixe à l'élément de commande ou au levier de réglage et le guidage à coulisse constitué par l'élément à coulisse et la barrette disposée dans les fentes veille à ce qu'un pivotement de l'élément de commande résulte en un pivotement du levier de réglage et **en ce qu'**une section (20) de l'élément de commande (5) chevauchant l'élément à coulisse (9) ne déborde pas dans une position neutre fermée sur le corps de robinet (2) et termine dans un plan avec ses bords tournés vers le corps de robinet (2).

2. Robinetterie sanitaire (1) selon la revendication 1, la fente (12) étant constituée dans l'élément à coulisse (9) de telle manière qu'une tige (13) guidée dans les fentes (12), reliée avec le levier de réglage (6) convertit le pivotement de l'élément de commande (5) autour de l'axe de pivotement de l'élément de commande (10) en pivotement du levier de réglage (6) autour de l'axe de pivotement du levier de réglage (7) .

3. Robinetterie sanitaire (1) selon la revendication 2, la tige (13) saisit une pièce d'adaptateur (14) vissée sur le levier de réglage (5) et est disposée avec ses extrémités ressortant de la pièce d'adaptateur (14) dans les fentes (12) de l'élément à coulisse (9).

4. Robinetterie sanitaire (1) selon l'une quelconque des revendications précédentes, l'élément à coulisse (9) ou l'élément de commande (5) est logé pouvant pivoter sur une couronne rotative (15) logée pouvant tourner eu égard à la cartouche de mélange (4).

5. Robinetterie sanitaire (1) selon la revendication 4, la couronne rotative (15) étant logée pouvant tourner dans la bague filetée (16) fixant la cartouche de mélange (4) dans le corps de robinet (2) dans une position vissée dans le corps de robinet (2).

6. Robinetterie sanitaire (1) selon la revendication 4 ou 5, une moulure (10) formant l'axe de pivotement de l'élément de commande est formée sur l'élément à coulisse (9) ou l'élément de commande (5) pour le logement en pivotement, laquelle est logée dans une saillie (17) constituée sur la couronne rotative (15).
